# EUROPEAN PATENT APPLICATION

(11) **EP 2 351 861 A1**
(43) Date of publication of application: **03.08.2011**
(21) Application number: 09823560.9
(22) Date of filing: 27.10.2009
(51) Int. Cl.: C22B 5/16, C22B 26/22

(54) **LASER REFINING APPARATUS AND LASER REFINING METHOD**

(30) Priority: 28.10.2008 JP 2008276340
(71) Applicant: Electra Holdings Co., Ltd., Chiyoda-ku Tokyo 100-0006 (JP)
(72) Inventor: YABE, Takashi, Tokyo 114-0013 (JP); CHOIJIL, Baasandash, Yokohama-shi Kanagawa 227-0062 (JP); SATOH, Yuji, Tokyo 142-0041 (JP)
(74) Representative: Skone James, Robert Edmund
(86) International application number: PCT/JP2009/068364
(87) International publication number: WO 2010/050450

(57) **Abstract**

A laser refining apparatus and the laser refining method for efficiently collecting evaporant other than oxygen from an oxidized compound.

(Means for solving the problem)

The laser refining apparatus comprises a stage inside a processing chamber where an oxidized compound is placed; an irradiation means for irradiating a laser under the condition that the oxidized compound placed on the stage is heated to a temperature at or above the boiling point of said oxidized compound; an attaching medium to which non-oxygen evaporant evaporated by the laser irradiated by the irradiation means attaches; and a feeding means for feeding gas that prevents the non-oxygen evaporant from becoming an oxidized compound into the processing chamber. The attaching medium is positioned so that the non-oxygen evaporant can attach to the attaching medium before becoming an oxidized compound, and the oxidized compound is metal oxide or silicon oxide.

## Description

### FIELD OF THE INVENTION

The invention is to a laser refining apparatus and the laser refining and specifically, it is related to a laser refining apparatus and the laser that can locally achieve an ultrahigh an efficiently decompose a metal compound so that the metal can be separated and refined without using heat by electricity or combustion of fossil fuel.

### BACKGROUND OF THE INVENTION

Patent Document 1 prepared by the inventors of the present invention discloses a hydrogen generation apparatus that efficiently uses renewable energy and collects reaction energy as well as generates hydrogen gas. This hydrogen generation apparatus comprises a reaction container for keeping metal elements, a water tank for supplying water to the reaction container, a laser for heating the metal elements by heating the part where the metal elements contact with the water, a hydrogen taking tube which collects the hydrogen gas and reaction energy that have been generated by the reaction between the metal elements and the water.
PATENT DOCUMENT 1 JPA 2007-145686

### SUMMARY OF THE INVENTION

### PROBLEM SOLVED BY THE INVENTION

It is known that when an oxidized compound such as metal oxide is heated to a temperature at or above the boiling point of the oxidized compound by using a laser etc., the bond between the metal and oxygen in the metal oxide becomes unbound.

However, when metal oxide is simply irradiated with a laser, the unbound metal will contact oxygen etc. in the air after sublimation and thus will cause recombination with said oxygen, resulting in becoming metal oxide again. It has been difficult to avoid such a phenomenon and to collect the metal before the metal taken out from the metal oxide combines with the oxygen in the air.

Therefore, the problem to be solved by the present invention is to efficiently collect evaporant other than oxygen from an oxidized compound.

### MEANS OF SOLVING THE PROBLEM

In order to solve the above problem, the laser refining apparatus according to the present invention comprises:
a stage inside a processing chamber where an oxidized compound is placed;
an irradiation means for irradiating a laser under the condition that the oxidized compound placed on the stage is heated to a temperature at or above the boiling point of said oxidized compound; and
an attaching medium to which non-oxygen evaporant evaporated by the laser irradiated by the irradiation means attaches.

The word "refining" used herein is not only limited to a narrow meaning of excluding impurities from a crude metal to improve the quality, but also have a broad meaning of excluding oxygen from various metal oxides and further have a meaning of excluding oxygen from silicon oxide. As examples of metal oxide, there are iron oxide, magnesium oxide, aluminum oxide, copper oxide, and titanium oxide, etc.

It may comprise a feeding means for feeding nitrogen gas, argon gas, helium gas, neon gas or inert gas, etc. that prevents the non-oxygen evaporant from becoming an oxidized compound into the processing chamber. Instead of or along with this, the attaching medium may be positioned so that the non-oxygen evaporant can attach to the attaching medium before becoming an oxidized compound.

It is preferred that it comprise a keeping means for keeping an approximate constant distance between the laser irradiation position of the oxidized compound and the attaching medium. This is to prevent the focal length of the laser irradiated to the oxidized compound from changing due to downsizing of the oxidized compound as a result of generating evaporant by the laser irradiation. This ensures the heating to a temperature at or above the boiling point for the oxidized compound.

In addition, it may comprise a moving means for causing a relative movement between the oxidized compound and the attaching medium. This allows to prevent the non-oxygen evaporant in the attaching medium from becoming an oxidized compound.

The laser may be a solid laser, gas laser or semiconductor laser that uses energy sources including solar light. This allows a new way of refining that is friendly to the global environment without using a power source originating from fossil fuel by realizing a laser generated from solar light or natural energy.

In order to increase the collection amount of the evaporant, several laser irradiation apparatuses may be used so that each laser can irradiate a different part of the oxidized compound.

In addition to the attaching medium, it comprises an oxygen-specific attaching medium to which oxygen evaporant evaporated from the oxidized compound attaches. Specifically, it is considered that the attaching medium and the oxygen-specific attaching medium are set respectively as a negative electrode and a positive electrode, and these are connected to a power source etc. to generate an electric field so that the evaporant is attached to the attaching medium and the oxygen is attached to the oxygen-specific attaching medium.

That means, for example, if magnesium oxide (MgO) is chosen as an oxidized compound, when a required laser is irradiated to this, Mg⁺ and O⁻ are generated, therefore by applying the electric field for the generating space as above, Mg⁺ is attracted to the negative electrode that is the attaching medium and O⁻ is attracted to the positive electrode that is the oxygen-specific attaching medium. Instead of generating an electric field, a magnetic field may be generated for an effective collection of evaporant.

As the attaching medium, a substance that is made of the same element as the non-oxygen evaporant may be used. For example, a magnesium plate is used as the attaching medium while magnesium oxide is used as the oxygen compound. This allows the evaporant of the same element to attach to said substance, increasing its volume and weight.

In addition, the laser refining method according to the present invention:
acquires the non-oxygen evaporant evaporated by irradiating a laser under the condition that the oxidized compound placed on the stage inside the processing chamber is heated to a temperature at or above the boiling point of said oxidized compound.

### EMBODYMENT OF THE INVENTION

With Reference to drawings, embodiments of the present invention are described hereinafter. Wherein like numerals denote like parts in each drawing.

### (EMBODIMENT 1)

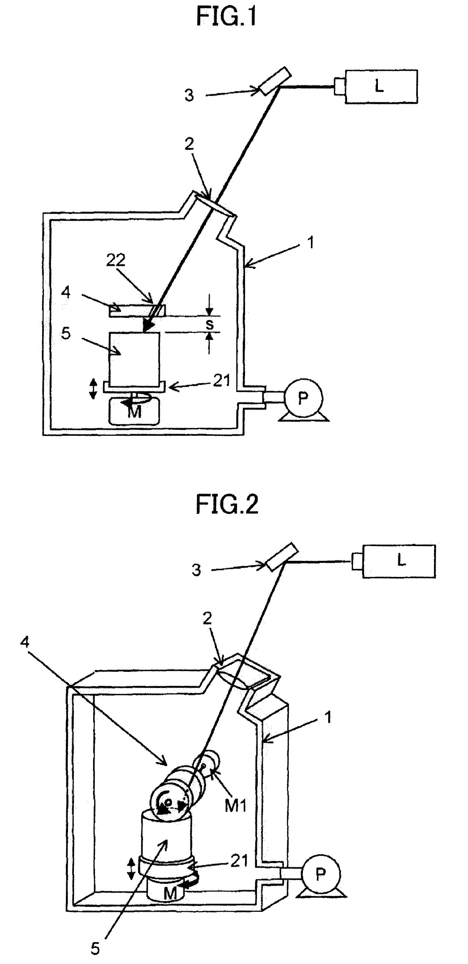

Fig. 1 shows a schematic configuration diagram of the laser refining apparatus of Embodiment 1 according to the present invention. Fig. 1 shows a processing chamber 1 which is generally called "chamber". The processing chamber 1 is equipped with an exhaust pump P which exhausts the air inside the processing chamber 1. The processing chamber 1 may be provided with a gas feed pipe (not shown) to feed nitrogen gas, argon gas, helium gas, neon gas or inert gas, etc. into the processing chamber 1.

In addition, the processing chamber 1 is provided with a stage 21 on which, for example, a cylindrical container 5 is installed. The container 5 stores various metal oxides or an oxidized compound such as silicon oxide. The oxidized compound may have any characteristics including, for example, solid form or powder form. In this embodiment, powdered magnesium oxide is used as the oxidized compound.

In contrast, the stage 21 is equipped with a motor M that rotates the stage 21 and also moves up and down the stage 21. The rotation of the stage 21 is a process for dispersively irradiating a laser to the oxidized compound. The moving up and down of the stage 21 is a process for irradiating a laser with the same spot diameter to the oxidized compound. Therefore, please note that it is not necessary to perform these processes.

An attaching medium 4 to which the evaporant of the oxidized compound attaches is aligned at an interval of a specified distance S above the container 5. In this embodiment, the evaporant is attached to the attaching medium 4 by colliding with the attaching medium 4 in the cooling process.

Although Fig. 1 shows an adoption example of plate-like attaching medium 4, the attaching medium 4 may be in various shapes such as those in other embodiments described below. Any material may be used for the attaching medium 4 only if the heat-resistant condition of not being dissolved by the heat of the evaporant attaching thereto is met. In this embodiment, a copper plate is used as the attaching medium 4.

Furthermore, an opening 22 is formed in the attaching medium 4 so that the laser irradiated from the laser irradiation apparatus L will not be blocked. In Fig. 1, although the formation angle of the opening 22 is made parallel to the laser, it shall not be limited to this angle as long as the laser reaches to the oxidized compound inside the container 5.

If, for example, magnesium oxide is used as the oxidized compound, the specified distance S is set to a distance that allows the magnesium evaporant to attach to the attaching medium 4 before becoming an oxidized compound through reoxidation due to contact with each other between the oxygen evaporant sublimated from the magnesium oxide inside the container 5 and the magnesium evaporant that is the non-oxygen evaporant, or contact between the magnesium evaporant and the oxygen in the remaining air inside the processing chamber 1.

In a specific example, the degree of vacuum inside the processing chamber 1 is set to 6 Pa by the pump P, and magnesium oxide is used as the oxidized compound; and if copper is used as the material of the attaching medium 4, the specified distance S is set to, for example, about 5 mm to 15 mm. In fact, as a result of experiment, when the specified distance S was 25 mm or less, non-oxygen evaporant could be attached to the attaching medium 4. When the specified distance S was approx. 7 mm to 14 mm, 2 times or more effect than that of approx. 5 mm was obtained. Furthermore, when the specified distance S was approx. 8 mm to 12 mm, 2.5 times or more effect than that of approx. 5 mm was obtained.

In addition, the less the residual amount of oxygen inside the processing chamber 1 becomes, the relatively longer the specified distance S can be set. As an extreme example, when the residual amount of oxygen in the processing chamber 1 is made extremely less by feeding inert gas etc. into the processing chamber 1 or reducing the pressure inside the processing chamber 1, the inner wall of the processing chamber 1 can also be used as an attaching medium. In such a case, the evaporant will attach to the vicinity of the pump P installed to the processing chamber 1 due to the exhaust by the pump P.

The upper part of the processing chamber is provided with a knows entrance window 2 for taking the laser irradiated the laser irradiation apparatus L into the processing chamber 1. In addition, the light path of the laser is provided with a reflecting mirror 3 for diverting the route of the laser irradiated from the laser irradiation apparatus L towards the entrance window 2.

It is preferred to use an optical fiber (not shown) at least for connecting between the laser irradiation apparatus L and the reflecting mirror 3. Similarly, optical fiber etc. may also be used to connect between the reflecting mirror 3 and the entrance window 2 as well as to connect between the entrance window 2 and the vicinity of the container 5. This allows to suppress the optical loss in the laser arriving at the oxidized compound.

An irradiation apparatus that irradiates, for example, a solid laser, gas laser or semiconductor laser with several kW may be used as the laser irradiation apparatus L. In the various experiments described later, an irradiation apparatus that irradiates a continuous light carbon dioxide laser was used. Here, it is preferred that the laser irradiation apparatus L be a solid laser, gas laser or semiconductor laser irradiation apparatus that uses energy source including solar light. For this kind of laser irradiation apparatus, refer to PCT/2009/57671 which has been applied by the inventors of the present invention and is not open to the public at the time of the application of the present invention, wherein it is incorporated in its entirety by the reference thereto.

The configuration of the kW of the laser and the spot diameter of the laser is important since it determines the temperature given to the oxidized compound. Specifically, when the laser is set to 1 kW with 2 mm in spot diameter, the temperature of the oxidized compound at the forming position of the spot diameter reaches about 5000 degrees C.

Therefore, in order to evaporate the metal oxide that is the oxidized compound and to efficiently separate it into metal and oxygen, when a laser irradiation apparatus L that irradiates a laser with 1 kW is used, it is preferred that the spot diameter be set to 2 mm or less.

Preferably, when the laser irradiation apparatus L with 1 kW is used, if the spot diameter is set to 2 mm or less, the expansion of the metal oxide at the laser irradiation position is facilitated, and subsequently the evaporant can be rapidly cooled down, allowing to prevent the metal from being reoxidized.

In addition, for example, when the laser irradiation apparatus with 1 kW is used so that the spot diameter is set to 1 mm, the metal oxide at the laser irradiation position is expanded to 1 cm, and the evaporant is immediately cooled down to 100 degrees C or less.

The temperature of the oxidized compound at the forming position of the spot diameter can be almost constant by maintaining constant the value wherein the kW of the laser is divided by the spot area of the laser. Therefore, for example, when a laser with 4 kW is used, it is preferred that the spot diameter be set to approx. 4 mm.

When powdered metal oxide is chosen as the oxidized compound, if a reducing agent such as carbon or silicon is mixed at a rate of, for example, 10% to 30%, the metal evaporant is less likely to recombine with the oxygen evaporant since the reducing agent absorbs and binds with the oxygen evaporant.

In order to mix the reducing agent with the powdered metal oxide, the inventors of the present invention have found a technique that allows to efficiently obtain the reducing agent and to mix the reducing agent with the metal oxide. This will be described later in another embodiment.

### (EMBODIMENT 2)

Fig. 2 shows a schematic configuration diagram of the laser refining apparatus of Embodiment 2 according to the present invention. In contrast to Fig. 1, Fig. 2 shows a laser refining apparatus with modifications wherein:
(1) the attaching medium 4 with a single plate-like shape is changed to that with two sets of disk-shapes; and
(2) the disk-shaped attaching medium 4 is made rotatable and is accordingly provided with a motor M1 which is linked with the attaching medium 4.

The important aspect is that, making the attaching medium 4 rotatable can prevent the non-oxygen evaporant in the attaching medium 4 from being reoxidized by oxygen evaporant etc. and becoming an oxidized compound.

As described above, the oxidized compound generates both oxygen evaporant and non-oxygen evaporant by irradiating a required laser. Here, since the oxygen evaporant continues to be generated even after the non-oxygen evaporant has attached to the attaching medium 4, the attached evaporant is possibly oxidized when the non-oxygen evaporant and the oxygen evaporant contact with each other.

In order to prevent this, it is considered to avoid contact between the attached evaporant and the oxygen evaporant. Therefore, in this embodiment, the attaching medium 4 is rotated so that the position of the attached evaporant is kept away from the oxygen evaporant. The rotation speed of the attaching medium 4 may be determined in accordance with the laser intensity, and in the case of Embodiment 1, it may be set to, for example, about 1 rpm to 20 rpm.

### (EMBODIMENT 3)

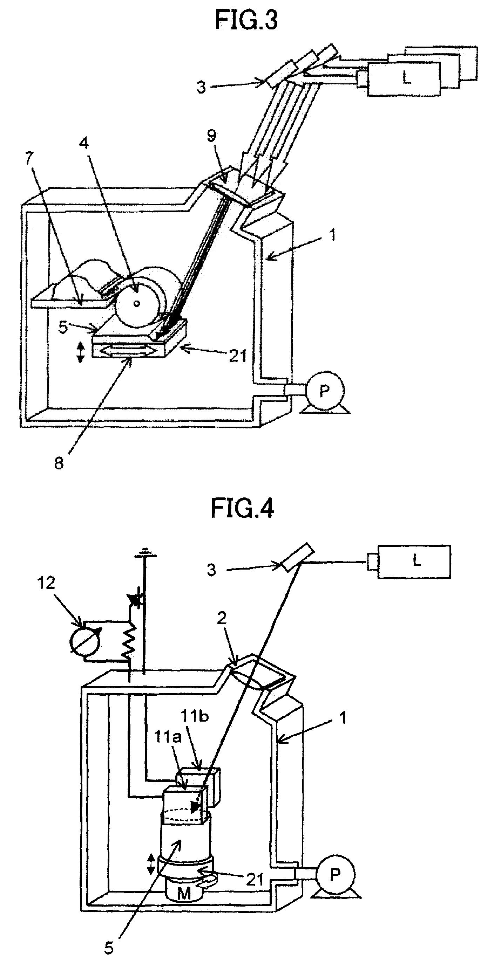

Fig. 3 shows a schematic configuration diagram of the laser refining apparatus of Embodiment 3 according to the present invention. In contrast to Fig. 1, Fig. 3 shows a laser refining apparatus with modifications wherein:
(1) several laser irradiation apparatuses L are provided;
(2) in accordance with the provision of several laser irradiation apparatuses L, a lens array 9 for collecting the laser irradiated from each laser irradiation apparatus L onto the oxidized compound inside the container 5 is installed to the processing chamber 1;
(3) the attaching medium 4 is changed to a rotatable one with a cylindrical shape;
(4) in accordance with using the cylindrical attaching medium 4, the stage 21 is made horizontally movable so that the laser is irradiated to the oxidized compound; and
(5) a collecting means 7 for collecting the evaporant attached to the attaching medium 4 is provided.

The provision of several laser irradiation apparatuses L allows the increase in the amount of evaporation of the oxidized compound. Thus, the laser refining apparatus shown in Fig. 3 has higher evaporant collection efficiency in comparison with that shown in Fig. 1. Therefore, in this embodiment, in order to increase the attaching area for the evaporant on the attaching medium 4, the attaching medium 4 is formed in a cylindrical shape which has a relatively large surface area.

As the amount of evaporation of the oxidized compound increases, the required time for a specified amount of evaporant to attach to the attaching medium 4 becomes shorter. Thus, in order to prevent the evaporant attaching efficiency from decreasing, this embodiment is adapted to collect the evaporant attached to the attaching medium 4 by the collecting means 7.

Although the collecting means 7 may have any configuration, as one example, it can be configured by installing a collecting plate that is selectively equipped with a cooling mechanism to facilitate the condensation of the evaporant, at an interval of several millimeters from the surface of the cylindrical attaching medium 4. It is preferred that this collecting plate have a sharp end face. In this way, when the evaporant attaches to the surface of the attaching medium 4 beyond the interval, the evaporant is scraped off the attaching medium 4 by the collecting plate, and thus the evaporant can be collected.

### (EMBODIMENT 4)

Fig. 4 shows a schematic configuration diagram of the laser refining apparatus of Embodiment 4 according to the present invention. In contrast to Fig. 1, Fig. 4 shows a laser refining apparatus with modifications wherein:
(1) a negative electrode 11b is provided as an attaching medium;
(2) a positive electrode 11a is provided as an oxygen-specific attaching medium to which the oxygen evaporant attaches; and
(3) a power source 12 is provided for applying a voltage to each electrode 11a and 11b.

For example, if magnesium oxide (MgO) is chosen as an oxidized compound, when a required laser is irradiated to this, Mg⁺ evaporant and O⁻ evaporant are generated. In this embodiment, the O⁻ evaporant is actively attached to the positive electrode 11a so that the Mg⁺ evaporant is prevented from recombining with oxygen etc. remaining in the processing chamber 1, while the non-oxygen evaporant and oxygen evaporant are separately and effectively collected.

Specifically, the positive electrode 11a and negative electrode 11b are provided above the container 5, and a voltage is applied between the positive electrode 11a and negative electrode 11b by turning on the power source 12. As a result, Mg⁺ is attracted to the negative electrode 11b that is the attaching medium, while O⁻ is attracted to the positive electrode 11a that is the oxygen-specific attaching medium.

The technique for effectively collecting evaporant will not be limited to those described in this embodiment etc. For example, a magnetic field may be applied instead of applying an electric field.

### (EMBODIMENT 5)

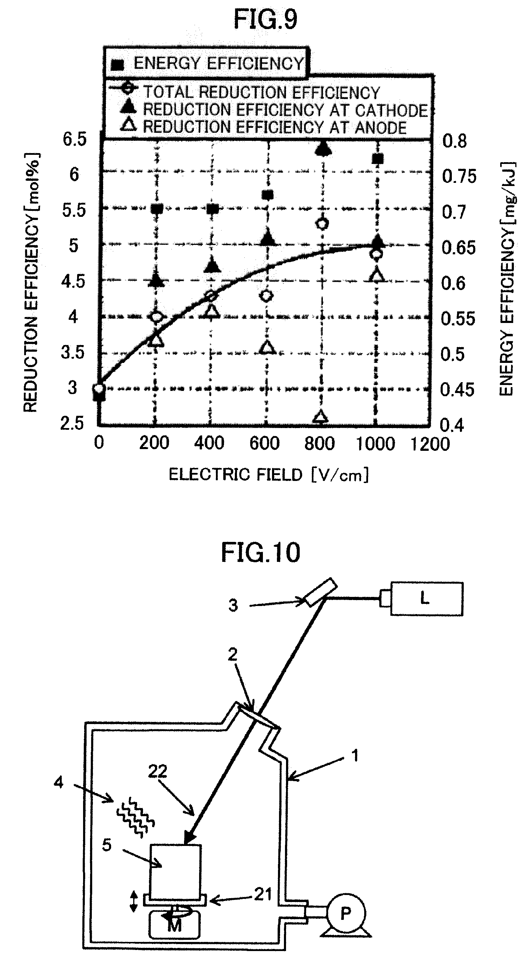

Fig. 10 shows a schematic configuration diagram of the laser refining apparatus of Embodiment 5 according to the present invention. In contrast to Fig. 1, Fig. 10 shows a laser refining apparatus with modifications wherein:
(1) the tip of the feed pipe for inert gas etc. is provided in the vicinity of the upper surface of the container 5.
(2) an attaching medium 4 that is formed with several corrugated plates is arranged on the opposite side of the container 5 from the tip of the feed pipe.

When a laser is irradiated by the laser irradiation apparatus L while inert gas etc. is fed into the container 5 from the feed pipe, the route of the evaporant of the oxidized compound is diverted towards the attaching medium 4 by the fed inert gas etc.

Since the attaching medium 4 is composed of several corrugated plates, the inert gas etc. itself passes through between the plates. In so doing, since each plate has depressions and projections due to its corrugated formation, the evaporant of the oxidized compound collides into the projections so that the evaporant is attached to the attaching medium 4. The structure of the attaching medium 4 shown in Fig. 10 is a mere example, and it can have a structure like a diesel filter. However, since diesel filters are difficult for inert gas and evaporant to pass through, it is desirable to have a structure comprising a part where evaporant collides with and a part where inert gas passes through, such as a corrugated plate.

### (OTHER EMBODIMENTS)

As described above, when a reducing agent is mixed with powdered metal oxide, the metal evaporant is less likely to recombine with the oxygen evaporant, and thus the collection efficiency for the metal evaporant increases. In this embodiment, a technique for extracting silicon from silicon dioxide so as to be used as a reducing agent is described.

First, the silicon dioxide is stored inside the container 5 in any one of the laser refining apparatuses of Embodiment 1 to Embodiment 5. A laser is irradiated from the laser irradiation apparatus L to this silicon dioxide under the condition that the temperature at the forming position of the spot diameter reaches the boiling point of silicon that is 2230 degrees C or higher (for example, 2500 to 3000 degrees C). As a result, oxygen is separated from the silicon dioxide, and silicon monoxide can be obtained.

Subsequently the silicon monoxide is stored in the container 5. Then, a laser is irradiated from the laser irradiation apparatus L to this silicon monoxide under the condition that the temperature at the forming position of the spot diameter reaches around the optimum temperature for the silicon formation that is around 930 degrees C (for example, 850 to 1100 degrees C). As a result, oxygen is separated from the silicon monoxide, and silicon can be obtained.

Next, the silicon as a reducing agent is mixed with metal oxide, and then refining is performed with any one of the techniques described in Embodiment 1 to Embodiment 5 so that metal evaporant can be efficiently collected.

### (VARIOUS EXPERIMENT RESULTS)

Hereinafter, the results of various experiments conducted for each embodiment of the present invention are described.

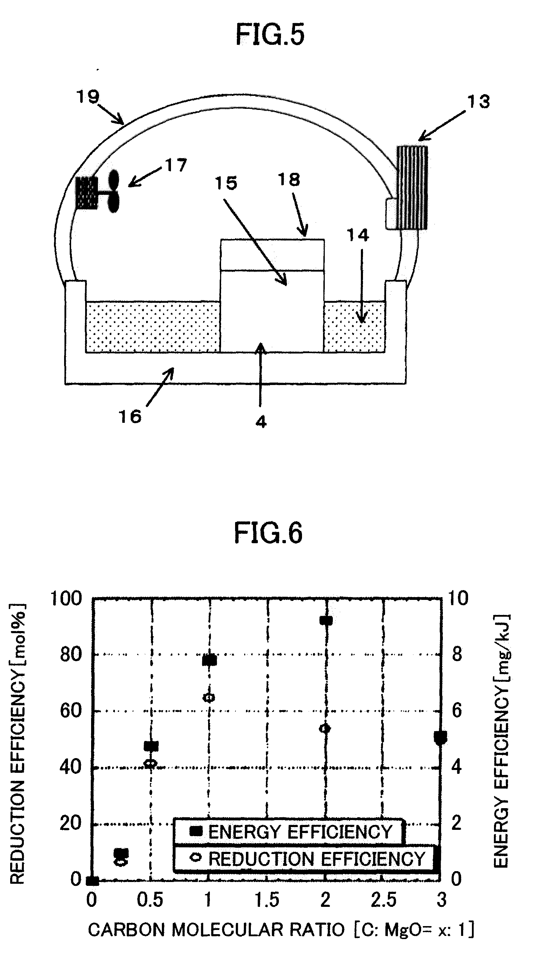

Fig. 5 shows a schematic diagram of an inspection apparatus that inspects the components of the substance attached to the attaching medium 4 of the laser refining apparatus of Fig. 1 etc. Fig. 5 shows a container 18 which is filled with dilute hydrochloric acid aqueous solution 15, an apparatus body 16 which is filled with cooling water 14 for the container 18, a hemispheroidal transparent cover 19 which covers the apparatus body 16, a diffusion fan 17 which is attached to the transparent cover 19, a measuring instrument 13 which measures the components of the gas carried by the diffusion fan 17.

The components of the substance attached to the attaching medium 4 were inspected as follows with this inspection apparatus. First, the cooling water 14 is put in the apparatus body 16, and the container 18 which is filled with dilute hydrochloric acid aqueous solution 15 is placed in the cooling water 14. Please note that it is not necessary to cool down the container 18.

In this state, the attaching medium 4 shown in Fig. 1 etc. is put into the container 18 which is filled with the dilute hydrochloric acid aqueous solution 15. Then, the transparent cover 19 is closed and the diffusion fan 17 is turned around.

Here, the reason why the dilute hydrochloric acid aqueous solution 15 is used is that Embodiment 1 uses magnesium oxide as the oxidized compound and uses a copper plate as the attaching medium 4. That means, when the laser refining apparatus is operated under this kind of condition, magnesium evaporant is generated and should be attached to the copper plate that is the attaching medium 4.

Since copper does not react with hydrochloric acid while magnesium does react with hydrochloric acid, when the refining-processed attaching medium 4 is put into the dilute hydrochloric acid aqueous solution 15, the magnesium evaporant is dissolved without dissolving the attaching medium 4 itself that is made of copper.

Therefore, the collection amount can be determined by measuring the amount of generated hydrogen based on the dissolved magnesium evaporant. Thus, the aqueous solution filled into the container 18 of the inspection apparatus shall not be limited to the dilute hydrochloric acid aqueous solution 15, and it may be appropriately determined including sulfuric acid or nitric acid etc. in accordance with the materials chosen for the oxidized compound and the attaching medium 4.

In the case of Embodiment 1, the magnesium evaporant contacts and reacts with the dilute hydrochloric acid aqueous solution 15, and as a result, hydrogen is generated. Consequently, when the diffusion fan 17 is turned around, the gas arriving at the measuring instrument 13 will contain hydrogen. The measuring instrument 13 measures the amount of hydrogen in the gas. This allows calculating the amount of the magnesium evaporant.

Fig. 6 shows a graph indicating the relationship between the carbon molar ratio and the reduction efficiency and energy efficiency. Here, magnesium oxide is chosen as the oxidized compound and is mixed with carbon as the reducing agent. In Fig. 6, the lateral axis indicates the carbon molar ratio [C : MgO = x : 1], the left vertical axis indicates the reduction efficiency [mol%], and the right vertical axis indicates the energy efficiency [mg/kJ]. The reduction efficiencies are plotted with ○, and the energy efficiencies are plotted with ■.

The term "reduction efficiency" here means the ratio of magnesium in the substance attached to the copper plate that is the attaching medium 4. The term "energy efficiency" here means the amount of magnesium generated by every 1 kJ of laser irradiation.

In this embodiment, argon gas was fed into the processing chamber 1, and an experiment was carried out in order to study the optimum condition for the reduction efficiency and the energy efficiency by measuring the amount of magnesium evaporant under different mixing molar ratios between carbon and magnesium oxide under the condition that the pump was operated so that the inside of the processing chamber 1 was maintained at the atmospheric pressure.

First, the optimum condition for the reduction efficiency is described. As shown in Fig. 6, when the carbon molar ratio was 0.25, the reduction efficiency did not reach 10 [mol%]. When the carbon molar ratio was set to 0.5, the reduction efficiency exceeded 40 [mol%]. When the carbon molar ratio was set to 1, the reduction efficiency exceeded 60 [mol%] and reached approx. 65 [mol%]. When the carbon molar ratio was set to 2, the reduction efficiency was reduced to about 55 [mol%]. When the carbon molar ratio was set to 3, the reduction efficiency was further reduced to about 50 [mol%]. As the above results, the optimum condition for the reduction efficiency is considered to be obtained when the carbon molar ratio is set to about 1.

Next, the optimum condition for the energy efficiency is described. When the carbon molar ratio was set to 0.25, the energy efficiency was about 1 [mg/kJ]. When the carbon molar ratio was set to 0.5, the energy efficiency reached slightly below 5 [mg/kJ]. When the carbon molar ratio was set to 1, the energy efficiency increased to about 8 [mg/kJ]. When the carbon molar ratio was set to 2, the energy efficiency exceeded 9 [mg/kJ]. When the carbon molar ratio was set to 3, the energy efficiency was reduced to about 5 [mg/kJ]. With the above results, the optimum condition for the energy efficiency is considered to be obtained when the carbon molar ratio is set to about 2.

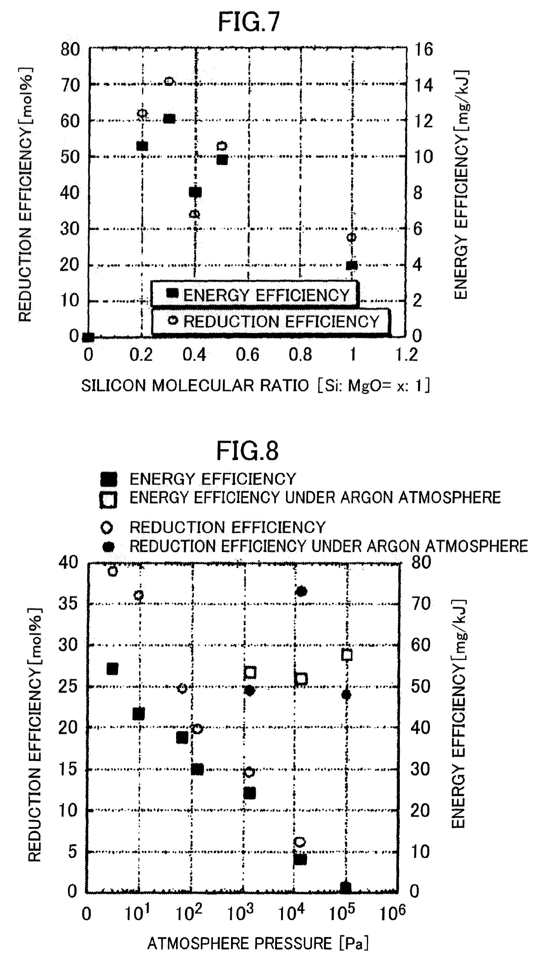

Fig. 7 shows a graph indicating the relationship between the silicon molar ratio and the reduction efficiency and energy efficiency, and it corresponds to Fig. 6. Here, it shows experiment results, wherein silicon is chosen as the reducing agent to be mixed with the magnesium oxide. The conditions of the experiment were the same as those regarding Fig. 6 except that the reducing agent was changed.

In the experiment results as shown in Fig. 7, the highest values of 70 [mal%] for reduction efficiency and 12 [mg/kJ] for energy efficiency were obtained when the silicon molar ratio was set to 0.3.

Fig. 8 shows a graph indicating measurement results wherein the variations in the reduction efficiency and energy efficiency are measured for different pressures inside the processing chamber 1 of Fig. 1. In Fig. 8, the lateral axis indicates the atmospheric pressure [Pa], the left vertical axis indicates the reduction efficiency [mol%], and the right vertical axis indicates the energy efficiency [mg/kJ]. The energy efficiency in the air atmosphere is plotted with ■, the energy efficiency in the argon atmosphere is plotted with □, the reduction efficiency in the air atmosphere is plotted with ○, and the reduction efficiency in the argon atmosphere is plotted with ●.

According to Fig. 8, since ■ falls to the right in the graph, it is clearly understood that the energy efficiency in the air atmosphere is reduced as the pressure inside the processing chamber 1 increases. Similarly, since ○ falls to the right in the graph, it is clearly understood that the reduction efficiency in the air atmosphere is also reduced as the pressure inside the processing chamber 1 increases.

These indicate that the reduction efficiency is reduced as the amount of oxygen in the processing chamber 1 increases. That means, when the amount of oxygen in the processing chamber 1 increases, the evaporated magnesium etc. once has a higher probability to contact with oxygen, and thus it becomes more likely to be reoxidized, resulting in reduction in both reduction efficiency and energy efficiency.

According to Fig. 8, the energy efficiency in the argon atmosphere and the reduction efficiency in the argon atmosphere can be maintained at a high efficiency even though the pressure inside the processing chamber 1 is high.

Fig. 9 shows experiment results regarding the laser refining apparatus shown in Fig. 4. In Fig. 9, the lateral axis indicates the electric field intensity [V/cm] applied by the power source 12, the left vertical axis indicates the reduction efficiency [mol%], and the right vertical axis indicates the energy efficiency [mg/kJ]. The energy efficiency is plotted with ■, the total reduction efficiency is plotted with o, and the reduction efficiency at the negative electrode is plotted with ▲. The reduction efficiency at the positive electrode is plotted with Δ.

Here, the pressure in the processing chamber 1 was set to about 6 Pa to 8 Pa, and the oxidized compound was not mixed with a reducing agent. According to Fig. 9, since ■ rises to the right in the graph, it is clearly understood that the energy efficiency improves as the electric field is intensified. It is also clearly understood that the reduction efficiencies at the negative electrode and the positive electrode improve as the electric field is intensified, since ▲ and Δ rise to the right in the graph. Therefore, the total reduction efficiency (plotted with ○) improves as the electric field is intensified.

This empirically proves that oxygen and magnesium in their ionized states are more easily attached respectively to the positive electrode 11a and the negative electrode 11b as the electric field intensity applied by the power source 12 increases.

### INDUSTRIAL APPLICABILITY

The present invention is available in the field of refining apparatus that uses laser.

### BRIEF SPECIFICATION OF THE DRAWINGS

Fig. 1 shows a schematic configuration diagram of the laser refining apparatus of Embodiment 1 according to the present invention.
Fig. 2 shows a schematic configuration diagram of the laser refining apparatus of Embodiment 2 according to the present invention.
Fig. 3 shows a schematic configuration diagram of the laser refining apparatus of Embodiment 3 according to the present invention.
Fig. 4 shows a schematic configuration diagram of the laser refining apparatus of Embodiment 4 according to the present invention.
Fig. 5 shows a schematic diagram of an inspection apparatus that inspects the components of the substance attached to the attaching medium 4 of the laser refining apparatus of Fig. 1 etc.
Fig. 6 shows a graph indicating the relationship between the carbon molar ratio and the reduction efficiency and energy efficiency.
Fig. 7 shows a graph indicating the relationship between the silicon molar ratio and the reduction efficiency and energy efficiency.
Fig. 8 shows a graph indicating measurement results wherein the variations in the reduction efficiency and energy efficiency are measured for different pressures inside the processing chamber 1 of Fig. 1.
Fig. 9 shows experiment results regarding the laser refining apparatus shown in Fig. 4.
Fig. 10 shows a schematic configuration diagram of the laser refining apparatus of Embodiment 5 according to the present invention.

### EXPLANATION OF SYMBOLS

1: Processing chamber
2: Entrance window
3: Reflecting mirror
4: Attaching medium
5: Container
7: Collecting means
9: Lens array

## Claims

1. A laser refining apparatus comprising:
a stage inside a processing chamber where an oxidized compound is placed;
an irradiation means for irradiating a laser under the condition that the oxidized compound placed on the stage is heated to a temperature at or above the boiling point of said oxidized compound; and
an attaching medium to which non-oxygen evaporant evaporated by the laser irradiated by the irradiation means attaches.

2. The laser refining apparatus as claimed in Claim 1, comprising a feeding means for feeding gas that prevents the non-oxygen evaporant from becoming an oxidized compound into the processing chamber.

3. The laser refining apparatus as claimed in Claim 1, wherein the attaching medium is positioned so that the non-oxygen evaporant can attach to the attaching medium before becoming an oxidized compound.

4. The laser refining apparatus as claimed in Claim 1, wherein the oxidized compound is metal oxide or silicon oxide.

5. The laser refining apparatus as claimed in Claim 1, comprising a keeping means for keeping an approximate constant distance between the laser irradiation position of the oxidized compound and the attaching medium.

6. The laser refining apparatus as claimed in Claim 1, comprising a moving means for causing a relative movement between the oxidized compound and the attaching medium.

7. The laser refining apparatus as claimed in Claim 1, wherein the laser is a solid laser, gas laser or semiconductor laser that uses energy sources including solar light.

8. The laser refining apparatus as claimed in Claim 1, in addition to the attaching medium, comprising an oxygen-specific attaching medium to which oxygen evaporated from the oxidized compound attaches.

9. The laser refining apparatus as claimed in Claim 1, the attaching medium is made of the same element as the non-oxygen evaporant.

10. A laser refining method for acquiring non-oxygen evaporant evaporated by irradiating a laser under the condition that the oxidized compound placed on the stage inside the processing chamber is heated to a temperature at or above the boiling point of said oxidized compound.
